# EUROPEAN PATENT SPECIFICATION

(11) **EP 3 291 359 B1**
(45) Date of publication and mention of the grant of the patent: **13.05.2020**
(21) Application number: 16186797.3
(22) Date of filing: 01.09.2016
(51) Int. Cl.: H01M 10/6556, H01M 10/6567, H01M 10/613, H01M 2/10, H01M 10/625, F28D 21/00

(54) **BATTERY PACK AND ENCAPSULATED INTERCONNECTION FOR A BATTERY PACK**
BATTERIEPACK UND VERKAPSELTE VERBINDUNG FÜR EIN BATTERIEPACK
BLOC-BATTERIE ET INTERCONNEXION ENCAPSULÉE POUR UN BLOC-BATTERIE

(43) Date of publication of application: 07.03.2018
(73) Proprietor: Samsung SDI Co., Ltd., Giheung-gu Yongin-si, Gyeonggi-do 17084 (KR)
(72) Inventor: WÜNSCHE, Ralph, 8010 Graz (AT); KRIEGER, Horst, 8453 St. Johann i. S. (AT); STOJANOVIC, Oliver, deceased (AT)
(74) Representative: Gulde & Partner

(56) References cited:
- EP-A1- 2 980 913
- DE-U- 1 968 891
- US-A1- 2014 202 671

## Description

### Field of the Invention

The present invention relates to a battery pack with an improved vertical connection between coolant circuits of stacked battery modules and to an encapsulated interconnection for connecting coolant circuits of a first battery module level and a second battery module level of a battery pack.

### Technological Background

A rechargeable battery differs from a primary battery in that it can be repeatedly charged and discharged, while the latter makes only the irreversible conversion of chemical to electrical energy. Low-capacity rechargeable batteries are used as the power supply for small electronic devices, such as cellular phones, notebook computers and camcorders, while high-capacity rechargeable batteries are used as the power supply for engines in hybrid vehicles and the like.

In general, a rechargeable battery includes an electrode assembly including a positive electrode, a negative electrode, and a separator interposed between the positive and negative electrodes, a case receiving the electrode assembly, and an electrode terminal electrically connected to the electrode assembly. The case may have a cylindrical or rectangular shape depending on the intended purpose and the actual use of the rechargeable battery. An electrolyte solution is injected into the case for charging and discharging of the rechargeable battery through an electrochemical reaction of the positive electrode, the negative electrode, and the electrolyte solution.

Rechargeable batteries may be used as a battery module formed of a plurality of battery cells connected in series so as to be used for powering the engine of a hybrid vehicle that requires high energy density. That is, the battery module is formed by connecting an electrode terminal of each of the battery cells depending on the amount of power required, such that a high-power rechargeable battery can be realized.

In order to safely use these battery modules, heat generated from the rechargeable batteries should be efficiently emitted, discharged and/or dissipated. If there is insufficient heat emission/discharge/dissipation, a temperature deviation occurs between the respective battery cells, such that the battery module cannot generate the desired amount of power. In addition, when the internal temperature of the battery increases due to the heat generated from the rechargeable battery, abnormal reactions occurs therein and thus charging and discharging performance of the rechargeable battery deteriorates and the life-span of the rechargeable battery is shortened.

Thus, cooling devices for cooling the rechargeable battery modules by efficiently emitting/discharging/dissipating heat generated from the battery are well-known in the art. As a cooling device has to be brought into thermal contact with a surface of a battery module, it is usually constructed as separate device to be attached to a surface of the battery module or is integrated in a housing of the battery module.

In order to further increase the energy density of battery systems, e.g. in order to increase the driving range of electric vehicles, a plurality of battery modules can be stacked and electrically interconnected to form a battery pack. In order to ensure sufficient emission/discharge/dissipation of heat generated from the battery modules such multi-level battery packs may comprise a cooling device for each layer of the battery pack.

WO 2013/168989 A1 discloses a secondary battery module comprising a plurality of sheet-like battery cells with hollow partition tubes separating adjacent battery cells. Coolant from a coolant supply line is distributed into the hollow partition tubes via side covers and a top cover of the battery module. Thus, the coolant is separately provided to each battery module.

US 2014/202671 A1 discloses a battery system with a plurality of heat sinks, wherein each heat sink is connected to a coolant distributor via a respective connection stub, coolant feed conduit and coolant discharge conduit, the aforementioned elements being surrounded by a sheathing element forming a closed volume.

The structures for distributing coolant to a plurality of battery modules are usually weak points in terms of mechanical stability and tightness, either during normal use or in a crash situation. Depending on the type of secondary battery, e.g. a lithium ion battery, and the type of used coolant, e.g. water-based coolants, leaking coolant can severely damage the battery modules and even surrounding structures, e.g. an electrical vehicle.

### Summary of the Invention

One or more of the drawbacks of the prior art could be avoided or at least reduced by means of the present invention. In particular, a battery pack and a vehicle are provided in accordance with the appended claims.

According to an aspect of the invention, a battery pack is provided comprising a first battery module level and a second battery module level, the first battery module level comprising:
- a first heat exchange member with a cooling area comprising a cooling tube;
- a coolant distributor line arranged outside the first heat exchange member and configured for supplying coolant to the cooling tube;
- a first secondary battery cell in thermal contact with the cooling area;
- a coolant interconnector configured for fluidly connecting the cooling tube or the coolant distributor line to the second battery module level; and
- an encapsulation element enclosing the coolant interconnector and confining a volume with an outer surface of the coolant interconnector.

The battery pack includes a first battery module, comprising a first heat exchange member, e.g. in form of a rigid cooling plate. The first heat exchange member may be made of casted aluminum and comprises cooling tubes, e.g. made of a metal material (e.g. iron, aluminum or magnesium, preferably steel), through which a coolant flows. In at least one cooling area of the first heat exchange member cooling tubes are arranged such that a sufficient cooling effect is achieved near a surface of the first heat exchange member. The at least one cooling area of the first heat exchange member may be an area, wherein a plurality of cooling tubes or a plurality of windings of one or more cooling tubes is positioned.

The first heat exchange member further comprises a coolant inlet and a coolant outlet connected to coolant distributor lines, i.e. coolant supply and return lines. The coolant inlet and outlet are in fluid communication with the cooling tubes. The first heat exchange member may further comprise an area that corresponds to a connection portion of the cooling tubes between the coolant ports (coolant inlet and outlet) and the cooling area(s). The coolant distributor lines are outside the cooling area(s) and outside the first heat exchange member and configured to provide coolant to the cooling tubes via the coolant ports.

At least one first secondary battery cell is in thermal contact with the at least one cooling area of the first heat exchange member. Thus, the cooling area contacts at least one surface of the at least one first secondary battery cell. Further, the coolant distributor channels are positioned remotely from the first secondary battery cells or other parts which may transport electricity. Preferably, the cooling tubes are molded within the first heat exchange member, e.g. they are embedded into the aluminum matrix of a rigid cooling plate. This further improves the separation of coolant and first secondary battery cells.

The battery pack further comprises a coolant interconnector for connecting the coolant circuits of different battery module levels of the battery pack. Without being limited to this embodiment, the coolant interconnector is described as an element of the first battery module level that provides a fluid connection to a second battery module level. However, the coolant interconnector might be also considered part of the second battery module level. Preferably, the coolant interconnector fluidly connects a cooling tube or a coolant distributor line of the first battery module level to the second battery module level, i.e. the coolant circuit of the second battery module level.

According to the present invention, the coolant interconnector is enclosed by an encapsulation element, wherein the formed enclosure is liquid-tight at least with respect to the coolant used in the battery pack. The encapsulation element confines a volume with an outer surface of the coolant interconnector and between the connected first and second battery module levels. Thus, the encapsulation element together with an outer surface of the coolant interconnector confines a volume. The volume can be solely confined by an outer wall of the encapsulation element (and partially by outer wall segments of connection joints, e.g. from the coolant interconnector to cooling tubes or coolant distributor lines). Alternatively, the volume can be confined by an outer wall of the encapsulation element together with a surface of the first battery module level facing the second battery module level and/or a surface of the second battery module level facing the first battery module level confines a volume. The confined volume is liquid-tight at least with respect to the coolant used in the battery pack and with the limitations described in the following.

The encapsulation element may comprise an outer wall confining the volume with the outer surface of the coolant interconnector and, preferably, surfaces of the connected battery module levels. The encapsulation element may be a monolithic component or constructed from multiple subcomponents. The encapsulation element may comprise connection joints for providing a liquid-tight connection to the first and second battery module level. The encapsulation element may further comprise liquid-tight connection joints between subcomponents.

Thus, with the encapsulation element an additional protection for the coolant interconnector is provided. The additional protection may refer to the structure of the coolant interconnector itself and/or to connection joints of the coolant interconnector. Thus, in the case of an leakage of the coolant interconnector, e.g. due to a failure of the coolant interconnector's structure or a failure of a interconnector's connection joint, leaking coolant is collected in the volume confined by the encapsulation element. Thus, the risk of contact between coolant and battery cells is further reduced. Further, the encapsulation element is configured to provide mechanical reinforcement to the coolant interconnector and thus can prevent its failure.

In a preferred embodiment, the second battery module level comprises a second heat exchange member with a cooling area comprising a second cooling tube, a second coolant distributor line arranged outside the second heat exchange member and configured for supplying coolant to the cooling tube of the second heat exchange member, wherein the coolant interconnector is configured for fluidly connecting the cooling tube or the coolant distributor line of the first battery module level to the cooling tube or the coolant distributor line of the second battery module level.

The coolant interconnector may be a monolithic component with connection joints to each of the coupled cooling tube(s) and/or coolant distributor line(s). Alternatively, the coolant interconnector may comprise at least two subcomponents, each subcomponent being monolithic with or welded/soldered to a cooling tube or coolant distributor line and/or each subcomponent comprising a connection joint for coupling to another subcomponent. Alternatively, each subcomponent comprises a first connection joint for a cooling tube or a coolant distributor line and a second connection joint for another subcomponent. The coolant interconnector may further comprise a tubing that fluidly connects the coolant interconnector's connection joints for the respective battery module levels.

Further preferred, the battery pack according to the present invention may comprise a plurality of stacked battery module levels, each battery module level comprising a battery module with a heat exchange member with at least one cooling area comprising at least one cooling tube, a plurality of secondary battery cells, each in thermal contact with at least one cooling area, a coolant distributor line arranged outside the heat exchange member and configured for supplying coolant to the cooling tubes, a coolant interconnector for fluidly connecting a cooling tube or a coolant distributor line to a cooling tube or a coolant distributor line of another battery module level; and an encapsulation element for liquid-tightly enclosing the coolant interconnector and confining a volume between the battery module levels connected by the coolant interconnector and an outer surface of the coolant interconnector.

Preferably, the first battery module level and the second battery module level of the battery pack are stacked in a stacking direction, the cooling tubes and coolant distributor lines are oriented in a direction substantially perpendicular to the stacking direction and the coolant interconnector is oriented in a direction substantially parallel to the stacking direction.

Also preferred is a battery pack according to the present invention, wherein the first battery module level and/or the second battery module level or any battery module level of the plurality of stacked battery module levels comprises a respective heat exchange member with a plurality of cooling areas and a respective plurality of secondary battery cells, wherein each secondary battery cell is in contact with at least one cooling area of the respective heat exchange member.

In a preferred embodiment, the encapsulation element is configured for securing the coolant interconnector against coolant leakage. This can be achieved by adapting the material of the encapsulation element to the used coolant. Preferably, the encapsulation element consists of a material that is inert to the used coolant, e.g. a plastic material.

Alternatively the encapsulation element is configured for securing the coolant interconnector against coolant leakage, i.e. for mechanically reinforcing the coolant interconnector, by adapting the material strength of the encapsulation element. Preferably, the thickness of an outer wall of the encapsulation element is increased in at least one potential fault region of the coolant interconnector, e.g. around a connection joint of the coolant interconnector. Further preferred, the encapsulation element comprises sealing gaskets, e.g. ring gaskets fitted to connection joints of the encapsulation element. Such sealing gaskets may sit tightly around connection joints of the coolant interconnector and may be formed of rubber material.

Alternatively the encapsulation element is configured for securing the coolant interconnector against coolant leakage by adapting the shape of the encapsulation element. Preferably, the shape, e.g. a cross section, of the encapsulation element differs from the shape, e.g. a cross section, of the coolant interconnector. Thus, regions for dissipating flow energy of leaked coolant are formed in the volume enclosed by the encapsulation element. Preferably, the encapsulation element comprises a cuboid shape and particularly preferred a cuboid shape with at least one dent, depression or deepening, e.g. in the form of a smaller cuboid positioned in a corner of the encapsulation element and/or in form of chamfered edges. Further, the shape of the encapsulation element may be adapted in order to form a main mechanically connection between connected battery module levels, i.e. to provide force transmission between battery module levels and thus to relieve the coolant interconnector.

In a further preferred embodiment of the battery pack the encapsulation element comprises an outlet configured for discharging coolant leaked from the coolant interconnector away from a secondary battery cell and/or the multi-level battery module. In this embodiment the enclosure formed by the encapsulation element, i.e. the confined volume, is liquid-tight except for an outlet opening. Thus, leaked coolant can be discharged away from any component of the battery pack carrying electricity. The leaked coolant may be discharged to the environment, i.e. in the case of water being the coolant, or may be discharged into a discharge container, i.e. for environment-unfriendly coolants. The outlet may further comprise a valve.

In another preferred embodiment of the battery pack, the encapsulation element comprises a reservoir volume configured for accommodating a predetermined amount of leaked coolant. The predetermined volume is such that during normal use of the battery pack and with a leakage rate below a certain threshold a sufficient amount of leaked coolant can be captured in the reservoir volume. Preferably, the certain amount is a significant amount of coolant. Advantageously, the reservoir volume prevents leaking of coolant to the environment or to electrically charged components of the battery pack for a certain amount of time, wherein the amount of time is preferably sufficient to fix the leakage of the coolant interconnector.

In another preferred embodiment, sensors are arranged in the outlet or in the reservoir volume for producing a first output signal in response to either a certain amount of leaked coolant passing the outlet or in response of the leaked coolant in the reservoir being raised to or above a certain level. In response of the first output signal a warning signal can be outputted to a user of the battery pack, e.g. to a driver of an electrically driven vehicle. Alternatively, the battery pack is automatically shut down in response to the first output signal.

Preferably, the cooling tubes of the battery pack are formed of a material of high temperature conductivity, preferably metal, e.g. copper, steel, aluminum or magnesium. Thus, a adequate heat transfer from the battery cells to the cooling tubes in the cooling areas is ensured. Further preferred, the coolant distributor lines and/or the liquid-tight encapsulation element are formed of a material of low thermal conductivity, e.g. a plastic material such as PFTE, PPE or PP. Thus, heat transfer between the coolant and the environment outside the cooling areas is reduced.

In another preferred embodiment of the battery pack, the first battery module level and the second battery module level are assembled within a housing of the battery pack. According to this embodiment, one or more heat exchange members are assembled within the housing. In particular, each of the battery module levels includes at least one heat exchange member and thus the housing includes multiple heat exchange members between these levels to ensure thermal contact with each of the secondary battery cells. Preferably, at least one heat exchange members is formed as an integrated floor of the battery pack housing. Preferably, the coolant distributor lines are positioned at an outer surface of the housing. The coolant interconnector may be also provided at an outside of the housing.

Preferably the cooling tubes are molded within the heat exchange member, e.g. they are embedded in a matrix of the heat exchange member. Hence, the cooling tubes cannot be removed and/or separated without destroying the heat exchange member. There are no additional fixing means for connecting the cooling tubes with the heat exchange member, which simplifies the manufacturing process (less assembly effort) and significantly reduces the manufacturing costs and total weight. Further preferred, the housing and the heat exchange members are made of extruded aluminum, which shows sufficient thermal conductivity and mechanical characteristics and is a low weight material.

According to another aspect of the present invention, a vehicle including a battery module as defined above is provided.

Further aspects of the present invention could be learned from the dependent claims or the following description.

### Brief Description of the Drawings

Features will become apparent to those being skilled in the art by describing in detail exemplary embodiments with reference to the attached drawings in which:
- Fig. 1: illustrates a perspective view of a conventional battery module level.
- Fig. 2: illustrates a perspective view of a battery module level according to an example.
- Fig. 3: illustrates a sectional view of the battery module level of figure 2.
- Fig. 4: illustrates a perspective view of a battery pack according to an example.
- Fig. 5: illustrates a detailed view of a battery module level comprising an encapsulated interconnection according to an embodiment of the present invention.
- Fig. 6: illustrates a perspective view of a battery module level according to an example.
- Fig. 7: illustrates a detailed view of the battery module level comprising an encapsulated interconnection according to an embodiment of the present invention.

### Detailed Description of the Invention

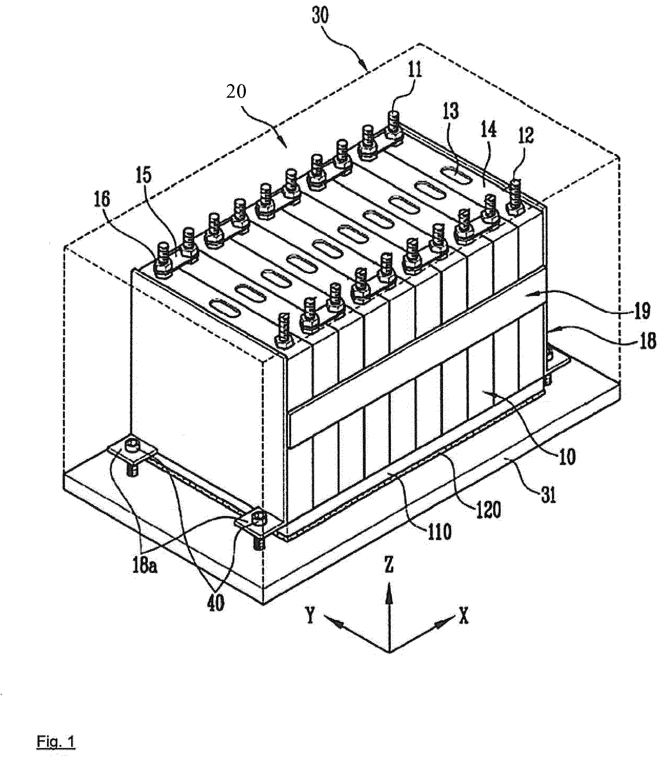

Referring to Fig. 1, an exemplary embodiment of a conventional battery module level 20 includes a plurality of battery cells 10 aligned in one direction and a heat exchange member 110 adjacent to a bottom surface of the plurality of battery cells 10. A pair of end plates 18 are provided to face wide surfaces of the battery cells 10 at the outside of the battery cells 10, and a connection plate 19 is configured to connect the pair of end plates 18 to each other thereby fixing the plurality of battery cells 10 together. Fastening portions 18a on both sides of the battery module level 20 are fastened to a support plate 31 by bolts 40. The support plate 31 is part of a housing 30.

Here, each battery cell 10 is a prismatic (or rectangular) cell, the wide flat surfaces of the cells being stacked together to form the battery module. Further, each battery cell 10 includes a battery case configured for accommodation of an electrode assembly and an electrolyte. The battery case is hermetically sealed by a cap assembly 14. The cap assembly 14 is provided with positive and negative electrode terminals 11 and 12 having different polarities, and a vent 13. The vent 13 is a safety means of the battery cell 10, which acts as a passage through which gas generated in the battery cell 10 is exhausted to the outside of the battery cell 10. The positive and negative electrode terminals 11 and 12 of neighboring battery cells 10 are electrically connected through a bus bar 15, and the bus bar 15 may be fixed by a nut 16 or the like. Hence, the battery module level 20 may be used as power source unit by electrically connecting the plurality of battery cells 10 to one bundle.

Generally, the battery cells 10 generate a large amount of heat while being charged / discharged. The generated heat accumulates in the battery cells 10, thereby accelerating the deterioration of the battery cells 10. Therefore, the battery module level 20 further includes a heat exchange member 110 adjacent to the bottom surface of the battery cells 10 so as to cool down the battery cells 10. In addition, an elastic member 120 made of rubber or other elastic materials may be interposed between the support plate 31 and the heat exchange member 110.

The heat exchange member 110 may include a cooling plate having a size of the bottom surface of the plurality of battery cells 10, e.g., the cooling plate may completely overlap the entire bottom surfaces of all the battery cells 10 in the battery module level 20. The cooling plate usually includes a passage through which a coolant can move. The coolant performs a heat exchange with the battery cells 10 while circulating inside the heat exchange member 110, i.e. inside the cooling plate.

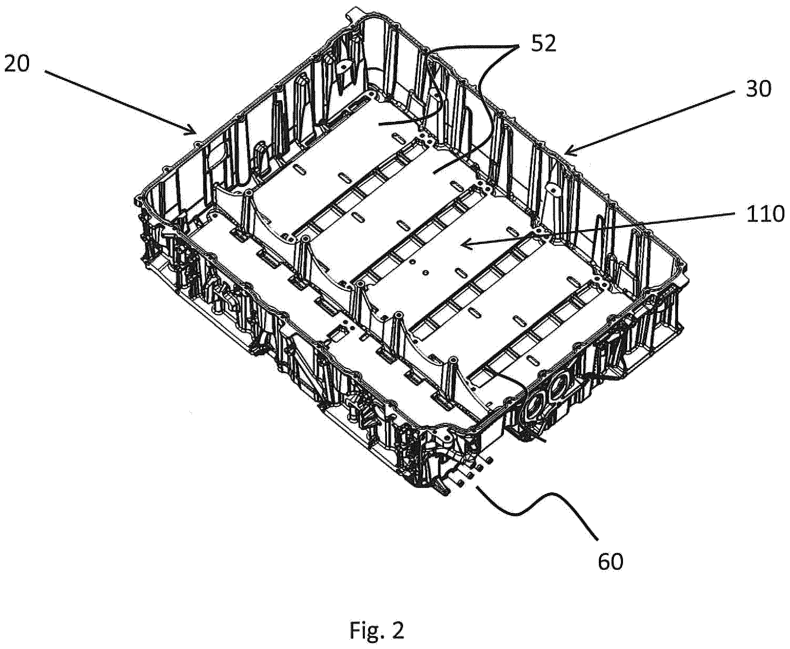

Fig. 2 illustrates a perspective view of a battery module level 20 according to an example, wherein a first battery module level 20 is formed by a housing 30 including a heat exchange member plate 110 on which the battery cells 10 (not shown) will be placed. In particular, the heat exchange member 110 includes a number of cooling areas 52 onto which the battery cells 10 (not shown) will be placed. The heat exchange member 110 is formed monolithic with a housing 30 and coolant distributor lines 60 are placed at the outer surface of the housing 30 and the heat exchange member 110. The heat exchange member 110 is formed of casted aluminum.

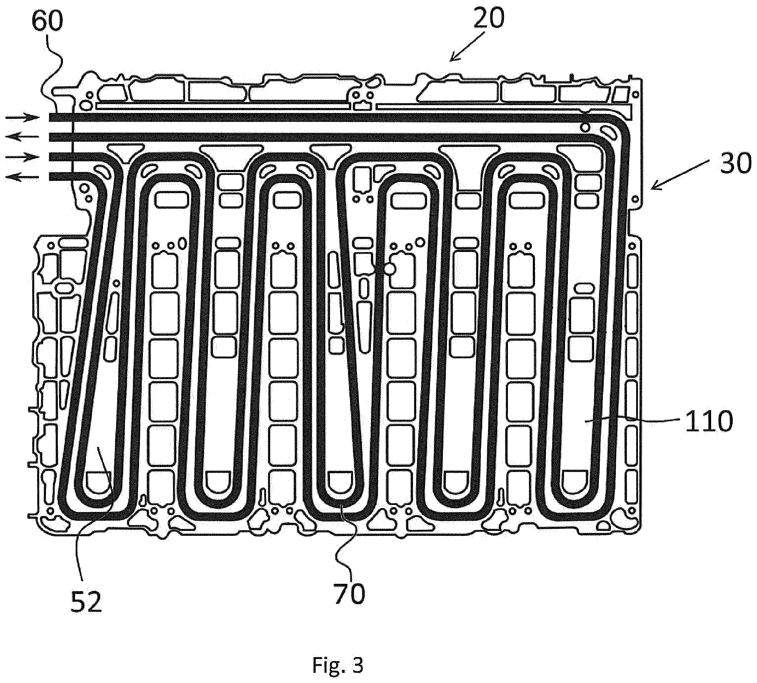

Fig. 3 illustrates a sectional view of the first battery module level 20 according to Figure 2 and shows the cooling tubes 70 embedded within (or molded inside) the aluminum matrix of the heat exchange member 110. The cooling tubes 70 are formed of steel and are tightly fitted within the heat exchange member 110 and no for further fixing means are required, i.e. there is a firmly bonded joint between the cooling tubes 70 and heat exchange member 110. In such configuration a thermal contact between the heat exchange member 110 and the cooling tubes 70 will be optimized.

The cooling tubes 70 show five parallel loops, each loop corresponds with one of the cooling areas 52. Supply and return coolant distributor lines 60, sections of which are shown, will be connected to the cooling tubes 70 such that opposed flow of the coolant occurs to ensure homogenous cooling. The heat exchange member 110 further comprises an area that corresponds to a connection portion of the cooling tubes 70 between the coolant ports (coolant inlet and outlet) to the coolant distributor lines 60 and the cooling area(s) 52.

A dimension and geometry of the cooling areas 52 may be chosen such that underneath a bottom surface of one battery cell 10, which is placed on the heat exchange member 110, at least four tubes could be located. Multiple cooling tubes 70 can be implemented if the pressure loss shall be as minimal as possible. For a more specific cooling of the battery cells 10 certain areas of the casted heat exchange member 110 can be heightened in order to improve the thermal conductivity.

Of course, the design of the cooling tubes 70 also depends on the manufacturing process. The heat exchange member 110 may be manufactured in that preformed steel cooling tubes 70 are arranged in a suitable casting mold (not shown). Afterwards, molten aluminum is casted into the mold and hardened. This method ensures an exact positioning of the cooling tubes 70 while pouring the liquid aluminum into the mold.

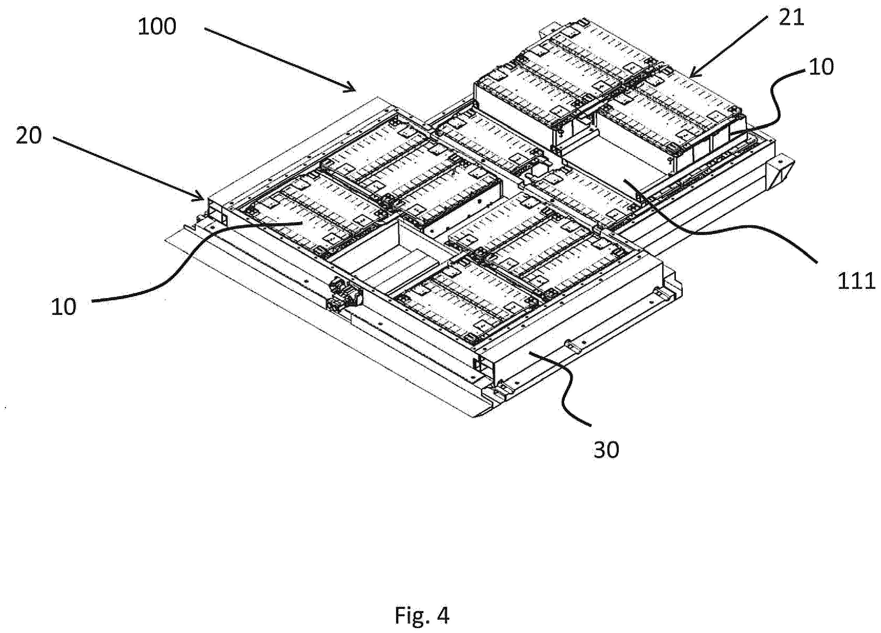

Figure 4 illustrates a perspective view of a battery pack 100 according to an example. The battery pack 100 comprises a first battery module level 20 and a second battery module level 21 stacked above the first battery module level 20. The first battery module level 20 comprises a housing 30 with an integrated heat exchange member 110 as discussed with reference to Figures 2 and 3. The housing 30 is only partially shown, i.e. only the housing part comprising the cooling areas 52 is shown. A plurality of first secondary battery cells 10 is placed within the housing 30 and on respective cooling areas (not shown).

Above the plurality of first secondary battery cells 10, a second heat exchange member 111 is arranged. The second heat exchange member 111 is formed as separate heat exchange member 111, i.e. a plate of casted aluminum with integrated, e.g. cast in, steel cooling tubes (not shown). A plurality of second secondary battery cells 10 is positioned on the second heat exchange member 111 within respective cooling areas (not shown).

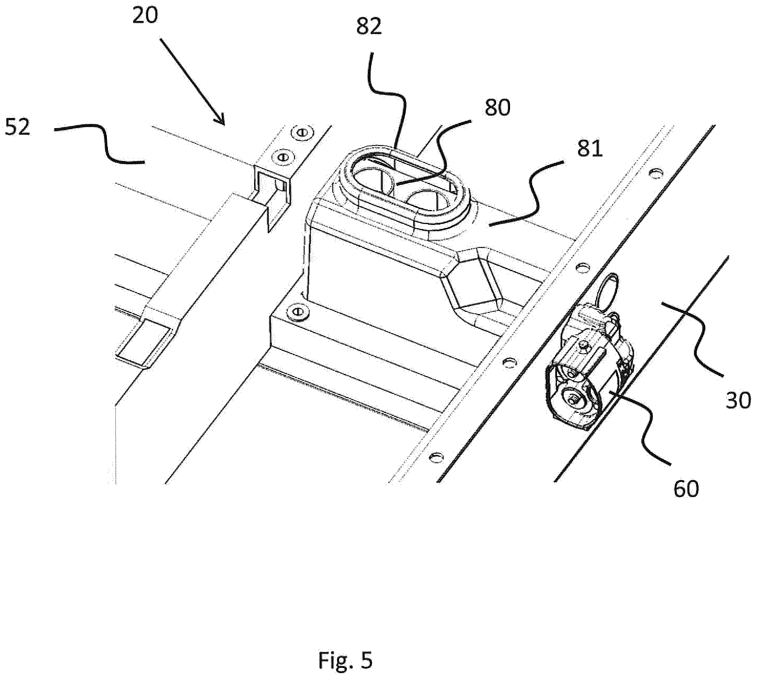

Figure 5 illustrates a detailed view of a battery module level comprising an encapsulated interconnection according to an embodiment of the present invention. Particularly, Figure 5 illustrates a portion of the housing 30 of a first battery module level 20 shown in Figure 2, i.e. the portion comprising an area that corresponds to a connection portion of the cooling tubes 70 between the coolant ports (coolant inlet and outlet) of the coolant distributor lines 60 (only partially shown) and the cooling area(s) 52.

Within this area a coolant interconnector 80 is positioned and fluidly connected to the embedded cooling tubes (not shown) of the housing 30 of the first battery module level 20. The coolant interconnector 80 is enclosed by an encapsulation element 81 that confines a volume with an outer surface of the coolant interconnector 80, the housing 30 of the first battery module 20 and the second battery module (not shown). The confined volume is liquid-tight with respect to the used coolant, wherein the liquid tightness is improved by sealing gasket 82 positioned on a connection joint of encapsulation element 81 to the second battery module level 21.

While the coolant interconnector 80 provides the vertical transport of coolant from the housing 30 of the first battery module level 20 to the heat exchange member 111 of the second battery module level 21 as shown in Figure 4, the encapsulation element 81 provides a mechanical reinforcement of the coolant interconnector 80 and is thus configured to prevent coolant leakage from the coolant interconnector 80. For the latter, the encapsulation element 81 comprises an outer wall that encloses a volume that is larger than the volume enclosed by the coolant interconnector 80 and is smaller than the volume enclosed by housing 30 of the battery pack 10. The outer wall of the encapsulation element 81 comprises a depression that forms a flow pocket for coolant leaked from the coolant interconnector 80.

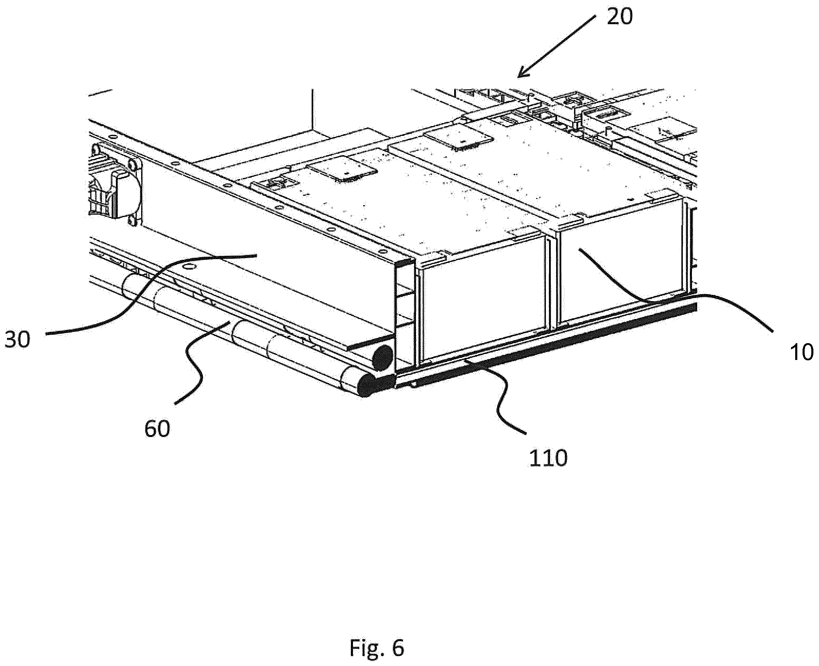

Figure 6 illustrates a perspective view of a battery module level 20 according to an example, particularly a detailed view of an outer portion of a housing 30 of a battery module level 20, e.g. a first battery module level as shown in Figure 2 and Figure 4. Within the housing 30 a plurality of first secondary battery cells 10 is placed on a bottom of the housing 30 comprising an integrated heat exchange member (not shown) defined by cooling tubes (not shown). Along an outer surface of the housing 30 the coolant distributor lines 60 for distributing coolant to the cooling tubes (not shown) are positioned.

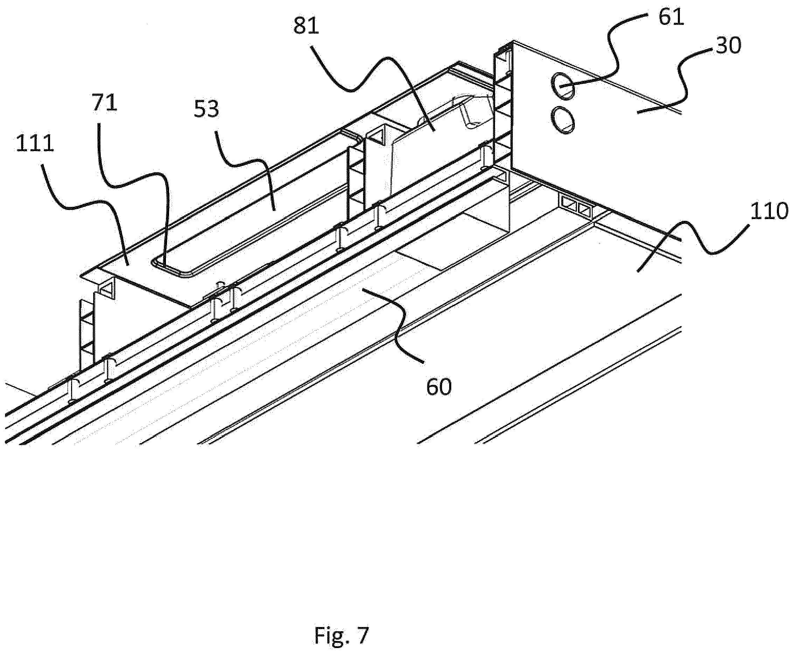

Figure 7 illustrates a detailed view of a battery pack 100 comprising an encapsulated interconnection according to an embodiment of the present invention. Particularly, Figure 7 shows a detailed view of the housing 30 for a battery pack 100 as shown in Figure 4. In Figure 7 a second heat exchange member 111 arranged above the plurality of first secondary battery cells 10 is visible. The second heat exchange member 111 comprises cooling areas 53 that are defined by a cooling tube 71.

Further shown is an encapsulation element 81 enclosing a coolant interconnector (not shown) that is fluidly connected to the coolant distributor lines 60 of the first battery module level and to the cooling tube 71 of the second heat exchange member 111 of the second battery module level 21. The encapsulation element 81, i.e. an outer wall of the encapsulation element 81, confines a volume with an outer surface of the coolant interconnector and the second heat exchange member 111 of the second battery module level 21. The encapsulation element 81 comprises a closed bottom as the fluid connection of the coolant interconnector to the coolant distributor lines 60 is positioned at a side wall of the encapsulation element 81. The volume confined by the encapsulation element 81 is positioned between the first battery module level and the second battery module level 21.

Further indicated is a second coolant distributor line 61 that is arranged outside the second heat exchange member 111. The second coolant distributor line 61 may protrude through a side wall of the encapsulation element 81 at the second battery module level 21 and may be fluidly connected to the coolant interconnector (not shown). Thus, redundancy in providing coolant to the second cooling tube 71 may be achieved, while improved pressure compensation between the first and second heat exchange members 110, 111 is provided via the coolant interconnector 80.

## Claims

1. Battery pack (100) with a first battery module level (20) and a second battery module level (21) stacked above the first battery module level (20), the first battery module level (20) comprising:
a first heat exchange member (110) with a first cooling area (52) comprising a first cooling tube (70);
a first secondary battery cell (10) in thermal contact with the first cooling area (52);
first coolant distributor lines (60) arranged outside the first heat exchange member (110) and configured for supplying coolant to the first cooling tube (70) and for returning coolant from the first cooling tube (70);
**characterized in that** the first battery module level (20) further comprises:
a coolant interconnector (80) configured for fluidly connecting the first cooling tube (70) or one of the first coolant distributor lines (60) to the second battery module level (21); and
an encapsulation element (81) enclosing the coolant interconnector (80) and confining a volume with an outer surface of the coolant interconnector (80).

2. Battery pack (100) according to claim 1, with the second battery module level (21) comprising:
a second heat exchange member (111) with a second cooling area (53) comprising a second cooling tube (71); and
second coolant distributor lines (61) arranged outside the second heat exchange member (111) and configured for supplying coolant to the second cooling tube (71) and for returning coolant from the second cooling tube (71);
wherein the coolant interconnector (80) is configured for fluidly connecting the first cooling tube (70) or one of the first coolant distributor lines (60) of the first battery module level (20) to the second cooling tube (71) or one of the second coolant distributor lines (61) of the second battery module level (21).

3. Battery pack (100) according to claim 1 or 2, wherein the first battery module level (20) and/or the second battery module level (21) comprises a respective heat exchange member (110, 111) with at least one cooling area (52, 53) and a respective plurality of secondary battery cells (10), each in contact with at least one cooling area (52, 53) of the respective heat exchange member (110, 111).

4. Battery pack (100) according to one of the preceding claims, wherein the encapsulation element (81) comprises an outlet configured for discharging coolant leaked from the coolant interconnector (80) away from a secondary battery cell (10) and/or the battery pack (100).

5. Battery pack (100) according to one of the preceding claims, wherein the encapsulation element (81) comprises a reservoir volume configured for accommodating a predetermined amount of leaked coolant.

6. Battery pack (100) according to one of the preceding claims, wherein the cooling tubes (70, 71) are formed of a material of a thermal conductivity higher than that of the material of the encapsulation element (81) and/or the coolant distributor lines (60, 61).

7. Battery pack (100) according to one of the preceding claims, wherein the first battery module level (20) and the second battery module level (21) are assembled within a housing (30) of the battery pack (100).

8. Battery pack (100) according to claim 7, wherein the coolant distributor lines (60, 61), and the coolant interconnector (80) are positioned at an outer surface of the housing (30).

9. Vehicle comprising a battery pack according to any one of the claims 1 to 8.

## Patentansprüche

1. Batteriepack (100) mit einer ersten Batteriemodulebene (20) und einer über der ersten Batteriemodulebene (20) gestapelten zweiten Batteriemodulebene (21), wobei die erste Batteriemodulebene (20) umfasst:
ein erstes Wärmeaustauschbauteil (110) mit einem ersten Kühlbereich (52), das ein erstes Kühlrohr (70) umfasst;
eine erste sekundäre Batteriezelle (10) in Wärmekontakt mit dem ersten Kühlbereich (52);
erste Kühlmittel-Verteilungsleitungen (60), die außerhalb des ersten Wärmeaustauschbauteils (110) angeordnet und zum Zuführen von Kühlmittel zu dem ersten Kühlschlauch (70) und zum Zurückführen von Kühlmittel aus dem ersten Kühlschlauch (70) ausgelegt sind;
**dadurch gekennzeichnet, dass** die erste Batteriemodulebene (20) ferner umfasst:
eine Kühlmittel-Verbindungsleitung (80), die zum Fluidverbinden des ersten Kühlrohrs (70) oder einer der ersten Kühlmittel-Verteilungsleitungen (60) mit der zweiten Batteriemodulebene (21) ausgelegt ist; und
ein Einkapselungselement (81), das die Kühlmittel-Verbindungsleitung (80) umhüllt und ein Volumen mit einer Außenoberfläche der Kühlmittel-Verbindungsleitung (80) eingrenzt.

2. Batteriepack (100) nach Anspruch 1 mit der zweiten Batteriemodulebene (21), die Folgendes umfasst:
ein zweites Wärmeaustauschbauteil (111) mit einem zweiten Kühlbereich (53), das ein zweites Kühlrohr (71) umfasst; und
zweite Kühlmittel-Verteilungsleitungen (61), die außerhalb des zweiten Wärmeaustauschbauteils (111) angeordnet und zum Zuführen von Kühlmittel zu dem zweiten Kühlrohr (71) und zum Zurückführen von Kühlmittel aus dem zweiten Kühlrohr (71) ausgelegt sind;
wobei die Kühlmittel-Verbindungsleitung (80) zum Fluidverbinden des ersten Kühlrohrs (70) oder einer der ersten Kühlmittel-Verteilungsleitungen (60) der ersten Batteriemodulebene (20) mit dem zweiten Kühlrohr (71) oder einer der zweiten Kühlmittel-Verteilungsleitungen (61) der zweiten Batteriemodulebene (21) ausgelegt ist.

3. Batteriepack (100) nach Anspruch 1 oder 2, wobei die erste Batteriemodulebene (20) und/oder die zweite Batteriemodulebene (21) ein jeweiliges Wärmeaustauschbauteil (110, 111) mit mindestens einem Kühlbereich (52, 53) und einer jeweiligen Vielzahl von sekundären Batteriezellen (10), von denen jede mit mindestens einem Kühlbereich (52, 53) des jeweiligen Wärmeaustauschbauteils (110, 111) in Kontakt steht, umfasst.

4. Batteriepack (100) nach einem der vorhergehenden Ansprüche, wobei das Einkapselungselement (81) einen Auslass umfasst, der zum Ablassen von aus der Kühlmittel-Verbindungsleitung (80) ausgelaufenem Kühlmittel weg von einer sekundären Batteriezelle (10) und/oder dem Batteriepack (100) ausgelegt ist.

5. Batteriepack (100) nach einem der vorhergehenden Ansprüche, wobei das Einkapselungselement (81) ein Reservoirvolumen umfasst, das zum Aufnehmen einer vorbestimmten Menge an ausgelaufenem Kühlmittel ausgelegt ist.

6. Batteriepack (100) nach einem der vorhergehenden Ansprüche, wobei die Kühlrohre (70, 71) aus einem Material mit einer höheren Wärmeleitfähigkeit als die des Materials des Einkapselungselements (81) und/oder der Kühlmittel-Verteilungsleitungen (60, 61) ausgebildet sind.

7. Batteriepack (100) nach einem der vorhergehenden Ansprüche, wobei die erste Batteriemodulebene (20) und die zweite Batteriemodulebene (21) in einem Gehäuse (30) des Batteriepacks (100) zusammengebaut sind.

8. Batteriepack (100) nach Anspruch 7, wobei die Kühlmittel-Verteilungsleitungen (60, 61) und die Kühlmittel-Verbindungsleitung (80) an einer Außenoberfläche des Gehäuses (30) positioniert sind.

9. Fahrzeug, das ein Batteriepack nach einem der Ansprüche 1 bis 8 umfasst.

## Revendications

1. Bloc-batterie (100) avec un premier niveau de module de batterie (20) et un second niveau de module de batterie (21) empilé au-dessus du premier niveau de module de batterie (20), le premier module de batterie (20) comprenant :
un premier élément d'échange de chaleur (110) avec une première zone de refroidissement (52) comprenant un premier tube de refroidissement (70) ;
un premier élément de batterie secondaire (10) en contact thermique avec la première zone de refroidissement (52) ;
des premières conduites de distribution de réfrigérant (60) agencées à l'extérieur du premier élément d'échange de chaleur (110) et configurées pour amener le réfrigérant au premier tube de refroidissement (70) et pour ramener le réfrigérant du premier tube de refroidissement (70) ;
**caractérisé en ce que** le premier niveau de module de batterie (20) comprend en outre :
un interconnecteur de réfrigérant (80) configuré pour raccorder de manière fluidique le premier tube de refroidissement (70) ou l'une des premières conduites de distribution de réfrigérant (60) au second niveau de module de batterie (21) ; et
un élément d'encapsulation (81) enfermant l'interconnecteur de réfrigérant (80) et confinant un volume avec une surface externe de l'interconnecteur de réfrigérant (80).

2. Bloc-batterie (100) selon la revendication 1, avec le second niveau de module de batterie (21) qui comprend :
un second élément d'échange de chaleur (111) avec une seconde zone de refroidissement (53) comprenant un second tube de refroidissement (71) ; et
des secondes conduites de distribution de réfrigérant (61) agencées à l'extérieur du second élément d'échange de chaleur (111) et configurées pour amener le réfrigérant au second tube de refroidissement (71) et pour ramener le réfrigérant du second tube de refroidissement (71) ;
dans lequel l'interconnecteur de réfrigérant (80) est configuré pour raccorder de manière fluidique le premier tube de refroidissement (70) ou l'une des premières conduites de distribution de réfrigérant (60) du premier niveau de module de batterie (20) au second tube de refroidissement (71) ou l'une des secondes conduites de distribution de réfrigérant (61) du second niveau de module de batterie (21).

3. Bloc-batterie (100) selon la revendication 1 ou 2, dans lequel le premier niveau de module de batterie (20) et/ou le second niveau de module de batterie (21) comprend (comprennent) un élément d'échange de chaleur (110, 111) respectif avec au moins une zone de refroidissement (52, 53) et une pluralité respective d'éléments de batterie secondaires (10), chacun en contact avec au moins une zone de refroidissement (52, 53) de l'élément d'échange de chaleur (110, 111) respectif.

4. Bloc-batterie (100) selon l'une des revendications précédentes, dans lequel l'élément d'encapsulation (81) comprend une sortie configurée pour décharger le réfrigérant qui a fui de l'interconnecteur de réfrigérant (80) à distance de l'élément de batterie secondaire (10) et/ou du bloc-batterie (100).

5. Bloc-batterie (100) selon l'une des revendications précédentes, dans lequel l'élément d'encapsulation (81) comprend un volume de réservoir configuré pour loger une quantité prédéterminée de réfrigérant qui a fui.

6. Bloc-batterie (100) selon l'une des revendications précédentes, dans lequel les tubes de refroidissement (70, 71) sont formés avec un matériau présentant une conductivité thermique supérieure à celle du matériau de l'élément d'encapsulation (81) et/ou des conduites de distribution de réfrigérant (60, 61).

7. Bloc-batterie (100) selon l'une des revendications précédentes, dans lequel le premier niveau de module de batterie (20) et le second niveau de module de batterie (21) sont assemblés dans un boîtier (30) du bloc-batterie (100) .

8. Bloc-batterie (100) selon la revendication 7, dans lequel les conduites de distribution de réfrigérant (60, 61) et l'interconnecteur de réfrigérant (80) sont positionnés au niveau d'une surface externe du boîtier (30) .

9. Véhicule comprenant un bloc-batterie (100) selon l'une quelconque des revendications 1 à 8.
